# FASCICULE DE BREVET EUROPEEN

(11) **EP 1 008 118 B1**
(45) Date de publication et mention de la délivrance du brevet: **29.05.2002**
(21) Numéro de dépôt: 98913877.1
(22) Date de dépôt: 10.03.1998
(51) Int. Cl.: G07F 7/08, G07F 17/00

(54) **PROCEDE DE CAUTIONNEMENT ENTRE DEUX PORTE-MONNAIE ELECTRONIQUES**
VERFAHREN UND AUSFÜHREN EINER GARANTIERTEN ZAHLUNG ZWISCHEN ZWEI ELEKTRONISCHEN GELDBÖRSEN
METHOD FOR CARRYING OUT A GUARANTEE DEPOSIT BETWEEN TWO ELECTRONIC PURSES

(30) Priorité: 11.03.1997 FR 9702876
(43) Date de publication de la demande: 14.06.2000
(73) Titulaire: SCHLUMBERGER Systèmes, 92120 Montrouge (FR)
(72) Inventeur: BEHNAM, Néda, Texas 77057 (US)
(86) Numéro de dépôt international: FR9800480
(87) Numéro de publication internationale: WO9840852

(56) Documents cités:
- EP-A- 0 205 691
- EP-A- 0 231 702
- WO-A-95/30211

## Description

La présente invention concerne un procédé de cautionnement entre un porte-monnaie électronique-propriétaire et un porte-monnaie électronique-client.

L'invention trouve une application particulièrement avantageuse dans le domaine des transactions électroniques effectuées au moyen de porte-monnaie électroniques.

D'une manière générale, les porte-monnaie électroniques se présentent comme des cartes à mémoire électronique classiques, en ce sens qu'ils sont constitués d'un corps de carte en matière plastique aux normes ISO dans lequel est inséré un module électronique destiné à être connecté à un lecteur ou terminal.

Par ailleurs, il existe aujourd'hui deux grandes catégories de porte-monnaie électroniques, à savoir les porte-monnaie électroniques jetables et les porte-monnaie électroniques rechargeables.

Dans les porte-monnaie électroniques jetables, le module électronique est essentiellement constitué par une mémoire simple dont le contenu, représentant le solde disponible, est décrémenté à chaque utilisation du montant de la transaction effectuée et ceci jusqu'à épuisement du solde. Ce type de porte-monnaie fonctionne exactement comme une carte téléphonique prépayée.

Les porte-monnaie électroniques rechargeables ont, quant à eux, une structure plus complexe puisqu'ils comprennent une mémoire réinscriptible dans laquelle est défini un fichier-solde dont le contenu est, comme pour le porte-monnaie électronique jetable, décrémenté à chaque transaction, ou, au contraire, incrémenté du montant de la somme rechargée, toutes ses opérations s'effectuant sous le contrôle d'un micro-processeur et avec un degré de sécurisation inexistant dans les porte-monnaie électroniques jetables (voir par example WO-A-9530211).

L'invention s'adresse à ce deuxième type de porte-monnaie électroniques.

Compte-tenu de leur très haut degré de potentialité, il apparait souhaitable d'étendre les fonctions des porte-monnaie électroniques rechargeables bien au-delà des simples opérations de débit/crédit classiques pour couvrir des transactions plus complexes telles que le cautionnement d'une marchandise louée par un client auprès d'un commerçant par exemple, propriétaire de ladite marchandise.

Aussi, le problème technique à résoudre par l'objet de la présente invention est de proposer un procédé de cautionnement entre un porte-monnaie électronique-propriétaire (PME-propriétaire) et un porte-monnaie électronique-client (PME-client), lesdits porte-monnaie électroniques comprenant, chacun, une mémoire réinscriptible dans laquelle est défini un fichier-solde, procédé qui permettrait de réaliser de manière très simple et sécurisée l'opération de cautionnement visée.

Le problème technique posé est résolu, selon l'invention, du fait que ledit procédé consiste à créer dans ladite mémoire réinscriptible de chaque porte-monnaie électronique un fichier-trace de caution présentant, pour chaque opération de cautionnement, un enregistrement comportant des champs de données caractéristiques de ladite opération de cautionnement, dont, au moins, un champ-caution et un champ-date-limite dans lesquels sont inscrits respectivement le montant de la caution demandée par le propriétaire au client pour une marchandise donnée et la date-limite de restitution de ladite marchandise au propriétaire, et en ce qu'à chaque opération de cautionnement effectuée entre les PME-propriétaire et client :
- dans une première étape de prise de caution, le fichier-solde du PME-client est débité du montant de la caution tandis que sont créés dans les fichiers-trace de caution des PME-propriétaire et client un nouvel enregistrement dans lesquels sont inscrits, au moins, le montant de la caution et la date-limite de restitution respectivement dans les champs-caution et date-limite, le fichier-solde du PME-propriétaire n'étant pas crédité du montant de la caution,
- dans une deuxième étape de restitution de la marchandise au propriétaire à une date non postérieure à la date-limite de restitution, le fichier-solde du PME-client est crédité d'un montant de remboursement au plus égal au montant de la caution, le fichier-solde du PME-propriétaire étant crédité de la différence entre le montant de la caution et le montant du remboursement,
- le fichier-solde du PME-propriétaire étant crédité du montant de la caution en l'absence de restitution de la marchandise par le client à la date-limite de restitution.

On comprend que le procédé de cautionnement conforme à l'invention ainsi défini présente de nombreux avantages.

En effet, dans le cas du cautionnement par chèque par exemple, s'il est facile de rembourser intégralement la caution par restitution au client de son chèque, par contre le remboursement partiel exige de la part du propriétaire qu'il établisse un chèque complémentaire en faveur du client. Avec le procédé de l'invention, l'opération de remboursement partiel est aussi simple que l'opération de remboursement total, seul diffère le montant de la somme d'argent créditée au solde du PME-client.

D'autre part, on peut observer que le montant de la caution n'est pas crédité au solde du PME-propriétaire dans la première étape de prise de caution du procédé, objet de l'invention, ce qui permet, lors de la deuxième étape de restitution de la marchandise, d'éviter tout problème de remboursement total ou partiel de la caution au cas où le propriétaire ne disposerait pas de la somme d'argent nécessaire ou en cas de problème de comptabilité.

De manière à assurer la sécurité de l'opération initiale de prise de caution, l'invention prévoit que, lors de ladite première étape, un certificat est calculé par le PME-propriétaire à partir d'au moins une desdites données caractéristiques de l'opération de cautionnement, et inscrit, dans chaque porte-monnaie électronique, dans un champ-certificat de l'enregistrement correspondant.

De même, l'opération de reprise de caution lors de la restitution de la marchandise est sécurisée du fait que, selon l'invention, ladite deuxième étape débute par une phase d'authentification au cours de laquelle le PME-client envoie au PME-propriétaire ladite au moins une donnée caractéristique ainsi que le certificat inscrit dans le champ-certificat, et en ce que le PME-propriétaire recalcule ledit certificat et le vérifie avec le certificat reçu du PME-client.

Il est également prévu par l'invention que, lors de la deuxième étape, un nouveau certificat est calculé par le PME-propriétaire à partir d'au moins ledit montant de remboursement et envoyé, avec le montant du remboursement, au PME-client, lequel recalcule le dit nouveau certificat et le vérifie avec le certificat reçu du PME-propriétaire, de manière à valider le crédit du PME-client du montant du remboursement.

Selon un mode de mise en oeuvre du procédé de l'invention, lesdites données caractéristiques de l'opération de cautionnement comprennent, en outre, un numéro d'identification, un numéro d'identification de la marchandise, un numéro de transaction. En particulier, ledit numéro d'identification de l'un des porte-monnaie électroniques est le numéro de série de l'autre porte-monnaie électronique.

La description qui va suivre en regard des dessins annexés, donnés à titre d'exemples non limitatifs, fera bien comprendre en quoi consiste l'invention et comment elle peut être réalisée.

La figure 1 est un schéma d'un porte-monnaie électronique-propriétaire et d'un porte-monnaie électronique-client aptes à effectuer une opération de cautionnement conforme au procédé de l'invention.

Les figures 2a et 2b sont des représentations schématiques des structures respectives des porte-monnaie électroniques-propriétaire et client de la figure 1.

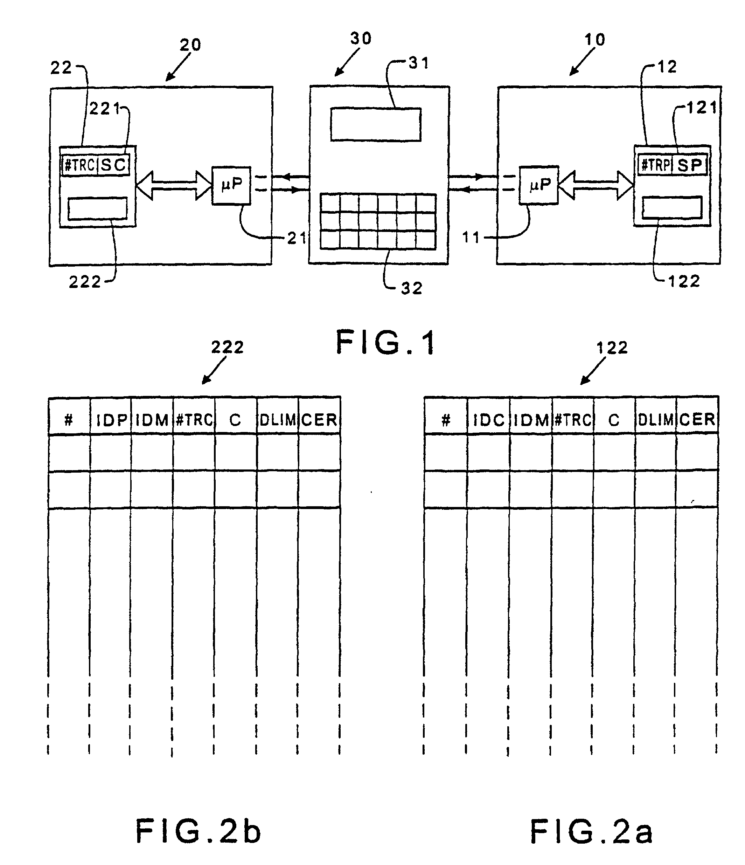

Sur la figure 1 est représenté un PME-propriétaire 10 appartenant à un commerçant, propriétaire d'une marchandise destinée à être louée moyennant le paiement d'une caution C à un client possédant lui-même un PME-client 20. La communication entre les deux porte-monnaie électroniques 10, 20 s'effectue par l'intermédiaire d'un terminal 30 comprenant, de manière classique, un écran 31 de visualisation et un clavier 32.

Comme l'indique la figure 1, les PME-propriétaire et client comportent, chacun, un micro-processeur 11,21 et une mémoire réinscriptible 12,22 de type E2PROM. Chaque mémoire réinscriptible 12,22 comprend en fichier-solde 121,221 dans lequel sont inscrits respectivement un numéro de transaction #TRP, #TRC et le solde SP,SC disponible dans le porte-monnaie électronique correspondant.

On peut voir sur la figure 2 que, dans le but d'effectuer une opération de cautionnement entre les PME-propriétaire 10 et client 20, chacune des mémoires réinscriptibles 12,22 comporte également un fichier-trace de caution 122,222 dont la structure est donnée respectivement sur les figures 2a et 2b.

D'une manière générale, chaque opération de cautionnement est définie dans les fichiers-trace de caution par un enregistrement repéré par un numéro # et un certain nombre de champs de données caractéristiques de ladite opération de cautionnement, dont, obligatoirement, un champ-caution C et un champ-date-limite DLIM dans lesquels sont inscrits respectivement le montant de la caution demandée par le propriétaire au client pour une marchandise donnée et la date-limite de restitution de ladite marchandise au propriétaire.

En outre, un enregistrement du fichier-trace de caution 122,222 peut comporter un champ-numéro d'identification qui dans le cas du fichier-trace de caution 122 du PME-propriétaire 10 est un numéro typique IDC du PME-client 20 et qui , inversement, est un numéro typique IDP du PME-propriétaire 10 dans le cas du fichier-trace de caution 222 du PME-client 20. De façon pratique, le numéro d'identification de l'un des porte-monnaie électroniques est pris égal au numéro de série de l'autre porte-monnaie électronique.

D'autres données peuvent constituer des champs des enregistrements des PME-propriétaire 10 et client 20, telles qu'un numéro IDM d'identification de la marchandise donnée en caution, un numéro # TRC de transaction, tiré notamment du fichier-solde 221 du PME-client 20, et un certificat CER destiné à assurer l'authentification de l'opération de cautionnement d'une manière qui va maintenant être expliquée avec le déroulement du procédé conforme à l'invention.

Dans une première étape de prise de caution, le montant C de la caution, la date-limite DLIM de restitution et le numéro IDM d'identification de la marchandise sont saisis au moyen du clavier 32 du terminal 30 et inscrits dans les champs correspondants d'un nouvel enregistrement des fichiers-trace de caution 122,222 des PME-propriétaire 10 et client 20.

Au cours de cette opération, un nouveau numéro #TRC de transaction est inscrit dans le fichier solde du PME-client 20 en même temps que le solde SC disponible est débité du montant C de la caution, le nouveau numéro #TRC de transaction étant inscrit dans les champs-numéro de transaction des nouveaux enregistrements.

Enfin, les champs-numéro d'identification IDP et IDC sont complétés respectivement par les numéros de série du PME-propriétaire 10 et du PME-client 20.

Le PME-propriétaire 10 calcule alors un certificat CER à partir de certaines des données caractéristiques de l'opération de cautionnement, par exemple un numéro d'identification, le numéro de transaction, le montant de la caution et la date-limite de restitution. Le certificat CER, calculé à l'aide d'un algorithme de cryptage, est inscrit dans les champs correspondants du nouvel enregistrement des fichiers-trace de caution 122,222.

Notons qu'au cours de cette première étape du procédé , le montant C de la caution n'est pas crédité au fichier-solde 121 du PME-propriétaire 10.

Lorsque, dans une deuxième étape, le client restitue la marchandise louée avant expiration de la date-limite, les deux porte-monnaie électroniques sont à nouveau mis en communication par le terminal 30. Se produit alors une phase de reconnaissance mutuelle des numéros d'identification, les PME - propriétaire 10 et client 20 s'échangeant leur numéro respectif IDC et IDP. Cette opération permet au PME-propriétaire de se positionner sur un enregistrement du fichier-trace de caution 122 correspondant au numéro d'identification reçu du PME-client.

Puis, le PME-client 20 envoie au PME-propriétaire 10 les données caractéristiques inscrites dans l'enregistrement correspondant à l'opération de cautionnement en cours, nécessaires au calcul du certificat, ainsi que le certificat CER lui-même. Le PME-propriétaire 10 recalcule alors le certificat et le vérifie avec le certificat CER reçu du PME-client 20. Si cette phase d'authentification est positive, l'opération continue, ou s'interrompt dans le cas contraire.

Simultanément, le PME-propriétaire 10, à l'aide du certificat CER ainsi recalculé, vérifie que le fichier-trace de caution 122 est positionné sur le bon enregistrement, ou, sinon, recherche le bon enregistrement, ceci pouvant se produire lorsque le même client a plusieurs cautions chez le même propriétaire.

Ensuite, de manière à effectuer le remboursement total ou partiel de la caution, le PME-client 20 fournit au PME -propriétaire 10 un nouveau numéro de transaction #TRC' tiré du fichier solde 221. Le PME -propriétaire 10 calcule alors un nouveau certificat CER' à partir du montant C' dont doit être crédité le PME-client 10, ce montant C' est introduit au moyen du clavier 32 du terminal 30 et doit être au plus égal au montant C de la caution, ceci étant vérifié par le PME-propriétaire 10. Interviennent également dans le calcul du nouveau certificat CER', par exemple le nouveau numéro de transaction #TRC', le numéro d'identification IDC du client.

Puis, le nouveau certificat CER' ainsi que le montant C' du remboursement est envoyé par le PME-propriétaire 10 au PME-client 20, lequel vérifie l'authenticité du nouveau certificat CER' reçu, de manière à valider le crédit du fichier-solde 221 du PME-client du montant C' du remboursement. Simultanément, le fichier-solde 121 du PME-propriétaire est crédité de la différence C-C'.

Bien entendu, si la marchandise n'est pas restituée par le client au propriétaire à la date-limite de restitution, le montant C de la caution est crédité au fichier-solde 121 du PME-propriétaire.

Enfin, signalons qu'il peut se produire qu'à la restitution de la marchandise le fichier-solde 221 du PME-client soit plein et ne puisse plus accepter de crédit supplémentaire. Dans ce cas, il est prévu un test de cette situation, avec affichage visuel sur l'écran 31 du terminal 30. Le marchand et le client doivent alors trouver un autre moyen ( espèces, chèques...) de versement au client du montant C' du remboursement.

## Revendications

1. Procédé de cautionnement entre un porte-monnaie électronique-propriétaire ou PME-propriétaire (10) et un porte-monnaie électronique-client ou PME-client (20), lesdits porte-monnaie électroniques comprenant, chacun, une mémoire réinscriptible dans laquelle est défini un fichier-solde (121,221), **caractérisé en ce que** ledit procédé consiste à créer dans ladite mémoire réinscriptible de chaque porte-monnaie électronique (10,20) un fichier-trace de caution (122,222) présentant, pour chaque opération de cautionnement, un enregistrement comportant des champs de données caractéristiques de ladite opération de cautionnement, dont, au moins, un champ-caution et un champ-date-limite dans lesquels sont inscrits respectivement le montant de la caution demandée par le propriétaire au client pour une marchandise donnée et la date-limite de restitution de ladite marchandise au propriétaire, et **en ce qu'**à chaque opération de cautionnement effectuée entre les PME-propriétaire et client :
- dans une première étape de prise de caution, le fichier-solde du PME-client (221) est débité du montant de la caution tandis que sont créés dans les fichiers-trace de caution des PME-propriétaire et client un nouvel enregistrement dans lequel sont inscrits, au moins, le montant de la caution et la date-limite de restitution respectivement dans les champs-caution et date-limite, le fichier-solde du PME-propriétaire n'étant pas crédité du montant de la caution,
- dans une deuxième étape de restitution de la marchandise au propriétaire à une date non postérieure à la date-limite de restitution, le fichier-solde du PME-client est crédité d'un montant de remboursement au plus égal au montant de la caution, le fichier-solde du PME-propriétaire étant crédité de la différence entre le montant de la caution et le montant du remboursement
- le fichier-solde du PME-propriétaire étant crédité du montant de la caution en l'absence de restitution de la marchandise par le client à la date-limite de restitution.

2. Procédé selon la revendication 1, **caractérisé en ce que**, lors de ladite première étape, un certificat est calculé par le PME-propriétaire à partir d'au moins une desdites données caractéristiques de l'opération de cautionnement, et inscrit, dans chaque porte-monnaie électronique, dans un champ-certificat de l'enregistrement correspondant.

3. Procédé selon la revendication 2, **caractérisé en ce que** ladite deuxième étape débute par une phase d'authentification au cours de laquelle le PME-client envoie au PME-propriétaire ladite au moins une donnée caractéristique ainsi que le certificat inscrit dans le champ-certificat, et **en ce que** le PME-propriétaire recalcule ledit certificat et le vérifie avec le certificat reçu du PME-client.

4. Procédé selon l'une quelconque des revendications 2 à 3, **caractérisé en ce que**, lors de la deuxième étape, un nouveau certificat est calculé par le PME-propriétaire à partir d'au moins ledit montant du remboursement et envoyé, avec le montant du remboursement, au PME-client, lequel recalcule ledit nouveau certificat et le vérifie avec le certificat reçu du PME-propriétaire, de manière à valider le crédit du PME-client du montant du remboursement.

5. Procédé selon l'une quelconque des revendications 1 à 4, **caractérisé en ce que** lesdites données caractéristiques de l'opération de cautionnement comprennent, en outre, un numéro d'identification, un numéro d'identification de la marchandise, un numéro de transaction.

6. Procédé selon la revendication 5, **caractérisé en ce que** ledit numéro d'identification de l'un des porte-monnaie électroniques est le numéro de série de l'autre porte-monnaie électronique.

## Patentansprüche

1. Kautionsverfahren zwischen einem elektronischen Eigentümer-Portemonnaie oder Eigentümer-PME (10) und einem elektronischen Kunden-Portemonnaie oder Kunden-PME (20), wobei besagte Portemonnaies jeweils einen neu beschreibbaren Speicher, in welchem eine Saldo-Datei (121,221) definiert ist, enthalten, **dadurch gekennzeichnet, dass** besagtes Verfahren darin besteht, in besagtem neu beschreibbaren Speicher jedes elektronischen Portemonnaies (10,20) eine Kautionsverfolgungs-Datei (122, 222) anzulegen, welche für jeden Kautionsvorgang eine Aufzeichnung mit für besagten Kautionsvorgang charakteristischen Feldern präsentiert, davon mindestens ein Kautions-Feld und ein Endtermin-Feld, in welche jeweils der Betrag der Kaution, die der Eigentümer vom Kunden für eine gegebene Ware fordert, und der Endtermin zur Rückerstattung besagter Ware an den Eigentümer eingetragen ist, sowie darin, dass bei jedem in den Eigentümer- und Kunden-PME ausgeführten Kautionsvorgängen :
- in einer ersten Kautionsübernahmestufe die Saldo-Datei des Kunden-Portemonnaies (221) mit dem Betrag der Kaution belastet wird, während in den Kautionsverfolgungs-Dateien der Eigentümer- und Kunden-PME einen neue Aufzeichnung erfolgt, in welcher mindestens der Betrag der Kaution und der Endtermin zur Rückerstattung in den jeweiligen Kautions- und Endtermin-Feldern eingetragen wird, wobei der Saldo-Datei des Eigentümer-PME der Kautionsbetrag nicht zugeschrieben wird,
- in einer zweiten Stufe zur Rückerstattung der Ware an den Eigentümer zu einem nicht nach dem Rückerstattungs-Endtermin liegenden Termin der Saldo-Datei des Kunden-PME ein Rückerstattungsbetrag von mindestens gleich dem Betrag der Kaution gutgeschrieben wird, wobei der Saldo-Datei des Eigentümer-PME die Differenz zwischen dem Kautionsbetrag und dem Rückerstattungsbetrag zugeschrieben wird.
- bei Nichtrückerstattung der Ware durch den Kunden zum Rückerstattungs-Endtermin der Kautionsbetrag der Saldo-Datei gutgeschrieben wird.

2. Verfahren gemäss Patentanspruch 1, **dadurch gekennzeichnet, dass** während besagter erster Stufe ein Zertifikat auf der Basis von mindestens einer der besagten charakteristischen Informationen des Kautionsvorgangs berechnet und in jedem elektronischen Portemonnaie in einem Zertifikat-Feld der entsprechenden Aufzeichnung eingetragen wird.

3. Verfahren gemäss Patentanspruch 1, **dadurch gekennzeichnet, dass** besagte zweite Stufe mit einer Authentifizierungsphase beginnt, während welcher das Kunden-PME dem Eigentümer-PME mindestens eine charakteristische Information sowie das im Zertifikat-Feld eingetragene Zertifikat sendet, sowie dadurch, dass das Eigentümer-PME besagtes Zertifikat neu berechnet und mit dem vom Kunden-PME empfangenen Zertifikat vergleicht.

4. Verfahren gemäss einem beliebigen Patentanspruch 2 bis 3, **dadurch gekennzeichnet, dass** während der zweiten Stufe ein neues Zertifikat vom Eigentümer-PME auf der Basis besagten Rückerstattungsbetrags berechnet und mit dem Betrag der Rückerstattung zum Kunden-PME gesendet wird, welches besagte neue Zertifikat neu berechnet und mit den vom Eigentümer-PME empfangenen Zertifikat vergleicht, um das Guthaben des Kunden-PME für den Betrag der Rückerstattung freizugeben.

5. Verfahren gemäss einem beliebigen Patentanspruch 1 bis 4, **dadurch gekennzeichnet, dass** besagte charakteristischen Daten des Kautionsvorgangs unter anderem eine Identifikationsnummer, eine Identifikationsnummer der Ware, eine Transaktionsnummer enthalten.

6. Verfahren gemäss Patentanspruch 5, **dadurch gekennzeichnet, dass** besagte Identifikationsnummer eines der elektronischen Portemonnaies die Seriennummer des anderen elektronischen Portemonnaies ist.

## Claims

1. Method for carrying out a guarantee deposit between an owner electronic purse or owner-PME (10) and a client electronic purse or client-PME (20), said electronic purses each including a rewritable memory in which a balance file (121, 221) is defined, **characterised in that** said method consists of creating in said rewritable memory of each electronic purse (10, 20) a guarantee trace file (122, 222) having for each guarantee deposit operation a recording comprising fields of data characteristic of said guarantee deposit operation including at least one guarantee field and a deadline field in which respectively entered are the amount of the guarantee asked for by the owner from the client for certain goods and the deadline for restoring said goods to the owner, and **in that** on each guarantee deposit operation carried out between the owner and client PMEs:
- in a first taking of guarantee stage, the balance file of the client PME (221) is debited by the amount of the guarantee, whereas created in the guarantee trace files of the owner and client PMEs are a new recording in which at least the amount of the guarantee and the restoration deadline respectively in the guarantee and deadline fields, the balance file of the owner-PME not being credited by the amount of the guarantee,
- in a second stage for restoring the goods to the owner on a date not later than the deadline recovery date, the balance file of the client-PME is credited with a repayment amount at the most equal to the amount of the guarantee, the balance file of the owner-PME being credited with the difference between the amount of the guarantee and the amount of the repayment,
- the balance file of the owner-PME being credited with the amount of the guarantee in the absence of the client restoring the goods on the restoration deadline date.

2. Method according to claim 1, **characterised in that** during said first stage a certificate is calculated by the owner-PME on the basis of at least one item of said data characteristic of the guarantee deposit operation and enters in each electronic purse in a certificate field of the corresponding recording.

3. Method according to claim 2, **characterised in that** said second stage starts by an authentication phase during which the client-PME sends the owner-PME at least one item of characteristic data, as well as the certificate entered in the certificate field, and **in that** the owner-PME recalculates said certificate and checks it with the certificate received from the client-PME.

4. Method according to one of claims 2 to 3, **characterised in that** during the second stage, a new certificate is calculated by the owner-PME on the basis of said repayment amount and sent along with the amount of the repayment to the client-PME which recalculates said new certificate and checks it with the certificate received from the owner-PME so as to validate the credit of the client-PME with the repayment amount.

5. Method according to one of claims 1 to 4, **characterised in that** said data characteristic of the guarantee deposit operation further include an identification number, a good identification number and a transaction number.

6. Method according to claim 5, **characterised in that** said identification number of one of the electronic purses is the series number of the other electronic purse.
